# EUROPÄISCHE PATENTANMELDUNG

(11) **EP 1 626 212 A1**
(43) Veröffentlichungstag der Anmeldung: **15.02.2006**
(21) Anmeldenummer: 05106559.7
(22) Anmeldetag: 18.07.2005
(51) Int. Cl.: F16K 1/22, F16K 27/02, F02B 37/18

(54) **Abgasregelelement für Aufladesysteme von Verbrennungskraftmaschinen**

(30) Priorität: 13.08.2004 DE 102004039294; 25.02.2005 DE 102005009160
(71) Anmelder: ROBERT BOSCH GMBH, 70442 Stuttgart (DE)
(72) Erfinder: Vogt, Guenther, 83607 Holzkirchen (DE)

(57) **Zusammenfassung**

Die Erfindung bezieht sich auf ein Regelelement für ein vorzugsweise mindestens zwei Abgasturbolader enthaltendes Aufladesystem im Abgastrakt einer Verbrennungskraftmaschine. Das Regelelement (2) ist in einem Gehäuse (1) angeordnet und als Butterfly-Klappe ausgeführt und um eine Schwenkachse (6) stufenlos bewegbar. Die Butterfly-Klappe (7) ist an ihrem Umfang mit einem Randbereich (31) versehen ist, der mit Anschlagflächen (12, 13) des Gehäuses in einem Dichtbereich flachdichtend zusammenwirkt. Vorzugsweise ist die Butterfly-Klappe (2) an wenigsten einem Zapfen (32) schwenkbar gelagert, wobei der Dichtbereich wenigstens über einen Teilumfang eines von einer Gehäusedichtfläche (36) dicht umfassten Zapfenabschnitts (35) fortgeführt.

## Beschreibung

### Technisches Gebiet

An Verbrennungskraftmaschinen kommen zur Leistungserhöhung Aufladeeinrichtungen zum Einsatz. Aufladeeinrichtungen können einen einzelnen Abgasturbolader oder auch zwei einstufige Turbolader in Serienschaltung umfassen, sowie als Druckwellenlader, als Impulslader oder dergleichen ausgeführt werden. Mit den Aufladeeinrichtungen wird der dem Abgas der Verbrennungskraftmaschine innewohnende Energiegehalt zur Druckerhöhung im Ansaugtrakt der Verbrennungskraftmaschine benutzt, um den Füllungsgrad der Zylinder der Verbrennungskraftmaschine, sei es eine fremdgezündete, sei es eine selbstzündende Verbrennungskraftmaschine, zu steigern.

### Stand der Technik

Bei Aufladeeinrichtungen, die an Verbrennungskraftmaschinen eingesetzt werden, z.B. bei Abgasturboladern, sind Waste-Gates bekannt, mit welchen der auf den Turbinenteil des Abgasturboladers wirkende Abgasmassenstrom regelbar ist. Die dazu eingesetzten über einen Aktuator betätigten Waste-Gates sind in der Regel einseitig angelenkt und verschließen in ihrer Schließstellung einen zum Turbinenteil des Abgasturboladers parallel verlaufenden Kanal. In ihrer Offenstellung geben die Waste-Gates diesen parallel verlaufenden Kanal frei, über welchen Abgas im Turbinenteil des Abgasturboladers vorbei unmittelbar in die Abgasleitung der Verbrennungskraftmaschine eingeleitet werden kann. Die an Abgasturboladern bisher eingesetzten Waste-Gates sind üblicherweise einseitig angelenkt und benötigen erhebliche Stellkräfte, da der Abgasdruck, insbesondere bei Volllast der Verbrennungskraftmaschine, die einseitig angelenkten Waste-Gates erheblich mechanisch beansprucht.

Aus DE 101 37 771 A1 ist eine Drosselklappeneinheit mit integrierter Drosselklappe bekannt. Drosselklappen werden in der Regel im Ansaugtrakt von Verbrennungskraftmaschinen eingesetzt und regeln den Luftmassenstrom, der auf der Einlassseite einer Verbrennungskraftmaschine zur Füllung der Zylinder mit der für die Verbrennung notwendigen Luft zugeführt wird. Die aus DE 101 37 771 A1 bekannte Drosselklappeneinheit ist in einem zwei Gehäusehälften umfassenden Drosselgehäuse aufgenommen. An der Drosselklappeneinheit ist ein Aufnahmegehäuse aufgenommen für einen die Drosselklappeneinheit betätigenden Stellantrieb. Die Drosselklappeneinheit wird gemäß DE 101 37 771 A1 im Spritzgießverfahren in einem Arbeitsgang einstückig unter Ausbildung einer Rahmenstruktur gefertigt. Die Rahmenstruktur umgibt eine Klappenfläche beidseits einer Lagerelemente aufweisenden Klappenwelle. Über die an die Klappenfläche angespritzte Rahmenstruktur wird die als Butterfly-Klappe ausgebildete Drosselklappe mechanisch verstärkt.

### Darstellung der Erfindung

Abweichend von bisher eingesetzten Waste-Gates an Aufladeeinrichtungen wie z.B. Abgasturboladem, kann das erfindungsgemäße Regelelement insbesondere dazu verwandt werden, den Abgasmassenstrom alternativ auf die Hochdruckturbine oder die Niederdruckturbine einer zweistufig ausgebildeten Aufladeeinrichtung zu leiten. Das erfindungsgemäß vorgeschlagene Regelelement ist vorteilhaft als Butterfly-Klappe ausgebildet, wodurch sich geringe Stellkräfte einstellen, da der Abgasdruck das Regelelement nicht einseitig belastet.

Das vorgeschlagene Regelelement kann auch Zwischenstellungen annehmen, so dass eine kontrollierte Drosselung des Abgasstroms möglich ist. Das Regelelement wird parallel zum Hochdruckturbinenteil geschaltet. In vorteilhafter Weise kann das Regelelement über einen Steller bewegt werden, wobei der Steller ein Stellglied umfasst, an dem ein Übertragungsglied aufgenommen ist. Dieses ist an einem um eine Gelenkstelle verschwenkbaren Stützelement geführt und prägt einem Kulissenhebel eine Schwenkbewegung zur Betätigung des Regelelements auf. Dadurch ist es möglich, dem Regelelement abhängig von dessen Stellposition unterschiedliche Betätigungsmomente aufzuprägen.

Das als Butterfly-Klappe ausgebildete Regelelement ist aus hitzebeständigem metallischem Material gefertigt. Die Lagerung des Regel elements erfolgt durch wenigstens einen, vorzugsweise durch zwei Zapfen, die in Verlängerung der Mittenachse an der Stirnseite der Butterfly-Klappe ausgebildet sind. Die Zapfenlager können sowohl als Gleitlager ausgebildet werden als auch als spezielle Nadellager aus hitzebeständigem metallischem Material gefertigt werden. Aufgrund der hohen Temperaturen, die im Abgastrakt einer Verbrennungskraftmaschine auftreten können, wird ein höherwertiges Material gewählt, welches insbesondere den thermischen Anforderungen gerecht wird und auch bei hohen Temperaturen eine Leichtgängigkeit des vorgeschlagenen Regelelements ermöglicht.

Das Regelelement und das dieses umgebende Gehäuse sind vorzugsweise mit Spiel ausgeführt, um auch im erhitzten Zustand erhöhte Stellkräfte zu vermeiden. Die mit dem Regelelement zusammenwirkenden Anschlagflächen können in Bezug auf den strömenden Abgasmassenstrom vorteilhaft in Axialrichtung im Gehäuse des Regelelements ausgebildet sein.

Das erfindungsgemäß vorgeschlagene Regelelement kann als einstückiges Bauteil in den Abgaskrümmer integriert werden. In dessen Wandflächen können mit einem Dicht bereich des Regelelements zusammenwirkende Anschlagflächen integriert werden.

Mit dem erfindungsgemäß vorgeschlagenen Regelelement kann mit einem betätigbaren, um seine Drehachse schwenkbaren Bauteil ein Umschalten des gesamten Abgasmassenstroms erfolgen, wobei eine gute Dosierbarkeit auch in den Zwischenstellungen gewährleistet bleibt. Auch bei thermisch bedingter Ausdehnung des Regelelements unterbleibt deren Verklemmen, da die Anschlagflächen der Dichtflächen in Bewegungsrichtung liegen. Aufgrund einer umlaufend ausgebildeten Dichtkante lässt sich eine gute Dichtwirkung realisieren, wobei aufgrund der Axiallagerung des erfindungsgemäß als Butterfly-Klappe ausgebildeten Regelelements keine Leckageströme auftreten können.

Ein besonderer Vorteil des umlaufenden Dichtbereiches besteht darin, dass dieser auch um die Zapfen verläuft. Dadurch wird insgesamt eine verbessere Dichtwirkung des Regelelementes erreicht. Dies ist insbesondere im Instationärverhalten von zweistufig aufgeladenen Motoren vorteilhaft, da die Hochdruckturbine ohne Leckageverluste in der Bypassleitung optimal angeströmt werden kann. Weiterhin lassen sich auf diese Weise auch höhere Druckverhältnisse des Hochdruckverdichters realisieren.

### Zeichnung

Anhand der Zeichnung wird die Erfindung nachstehend eingehender beschrieben.

Es zeigt:
- Figur 1: eine Schnittdarstellung des erfindungsgemäß vorgeschlagenen Regelelementes, integriert in den Abgaskrümmer und um eine senkrechte Zeichenebene verlaufende Drehachse bewegbar,
- Figur 2: die Ansicht eines teilweise aufgeschnittenen Gehäuses mit integriertem Regelelement,
- Figur 3: eine perspektivische Draufsicht auf das in Figur 2 dargestellte, teilweise aufgeschnittene Gehäuse mit Regelelement,
- Figur 4: eine seitliche, perspektivische Ansicht des Abgaskrümmerbereichs mit integriertem Regelelement.

### Ausführungsvarianten

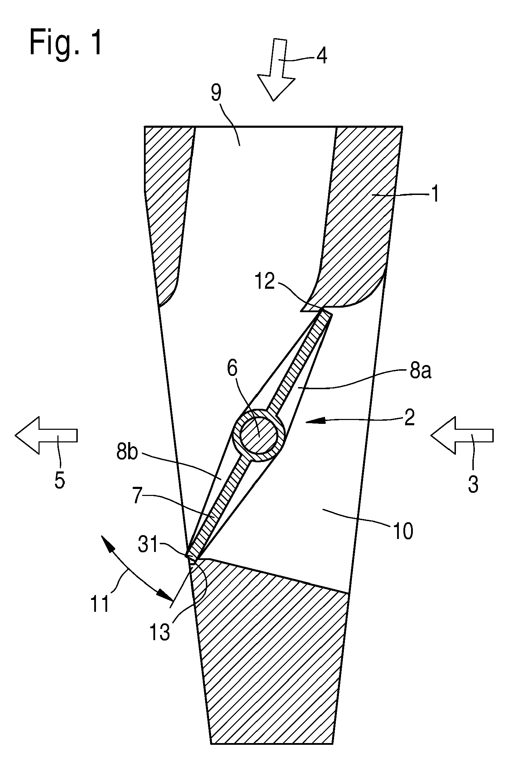

Der Darstellung gemäß Figur 1 ist eine schematische Ansicht eines im Abgastrakt einer Verbrennungskraftmaschine angeordneten Abgaskrümmers zu entnehmen. Der Abgaskrümmer umfasst ein Gehäuse 1, in welchem ein Regelelement 2 aufgenommen ist. In das Gehäuse 1 tritt einerseits ein Abgasstrom 3 von der Verbrennungskraftmaschine aus ein und andererseits ein Abgasstrom 4, der von einem in Figur 1 nicht dargestellten Hochdruckturbinenteil eines ersten Abgasturboladers stammt. Aus dem in Figur 1 dargestellten Gehäuse tritt andererseits ein Abgasstrom 5 zu einem nicht dargestellten Niederdruck-Turbinenteil eines zweiten Abgasturboladers aus. Der Abgasstrom kann aber auch an einem anderen Ort zugeführt werden, so dass das Regelelement 2 nicht mit dem Abgasstrom beaufschlagt wird. Das Regelelement 2 wird in diesem Fall nur zwischen der Verbrennungskraftmaschine und der Einmündungsstelle des Hochdruckturbinenteil in die Abgasleitung eingesetzt.

Das in Figur 1 dargestellte Regelelement 2 ist um eine Schwenkachse 6 verschwenkbar. In Figur 1 ist das Regelelement 2 in seiner Schließstellung dargestellt. Bei der Offenstellung des Regelelements 2, d.h. bei in Bezug auf die Darstellung gemäß Figur 1 in horizontale Richtung gestelltem Regelelement 2 ist dieses entsprechend des Doppelpfeils 11 in beide Richtungen verschwenkbar. Das Regelelement 2 ist als Butterfly-Klappe 7 mit einer strömungsgünstig ausgebildeten Oberseite 8a und Unterseite 8b ausgebildet. An dem Regelelement 2 ist ein umlaufender Randbereich 31 ausgebildet, der in der Darstellung gemäß Figur 1 einerseits an einer ersten Anschlagfläche 12 des Gehäuses 1 und andererseits an einer zweiten Anschlagfläche 13 des Gehäuses 1 anliegt. Der Abgasstrom 4, der vom Hochdruckturbinenteil der Aufladeeinrichtung stammt, strömt über eine Zuströmöffnung 9 in der Gehäuse 1 ein; der Abgasstrom 3, von der Verbrennungskraftmaschine herrührend, strömt über die Zuströmöffnung 10 ein und passiert das Regelelement 2 - je nach Schwenkstellung um die Schwenkachse 6 - in einem größeren oder einem geringeren Maße.

Von der in Figur 1 dargestellten Schließstellung ist das um die Drehachse 6 verschwenkbare Regelelement 2 im Uhrzeigersinn verstellbar. In der Darstellung gemäß Figur 1 liegt der Randbereich 31 der Butterfly-Klappe 7 sowohl an der ersten Anschlagfläche 12 des Gehäuses 1 an als auch an der zweiten Anschlagfläche 13 des Gehäuses 1. Das Regelelement 2 gemäß der Darstellung in Figur 1 ist als Butterfly-Klappe ausgebildet, die geringe Stellkräfte erfordert, da der Abgasdruck nicht einseitig belastet, sondern beidseits der Schwenkachse 6 wirkt.

In der Darstellung gemäß Figur 1 befindet sich der Randbereich 31 der Butterfly-Klappe 7 in Kontakt mit der ersten Anschlagfläche 12 und der zweiten Anschlagfläche 13. Dadurch ist die Zuströmöffnung 10, durch welche der Abgasstrom 3 dem Regelelement 2 zugeleitet wird, verschlossen. In der in Figur 1 dargestellten Position gibt die an ihre Anschlagflächen 12 bzw. 13 gestellte Butterfly-Klappe des Regelelements 2 eine sich vom hochdruckseitigen Turbinenteil der zweistufigen Aufladeeinrichtung zum niederdruckseitigen Turbinenteil 5 erstreckende Strömungsverbindung frei. Dies bedeutet, dass in der in Figur 1 wiedergegebenen Position des Regelelements 2 der Abgasstrom 3 der Verbrennungskraftmaschine über die hintereinander geschalteten Turbinenteile auf Hochdruckseite und Niederdruckseite einer zweistufig ausgebildeten Aufladeeinrichtung geführt wird.

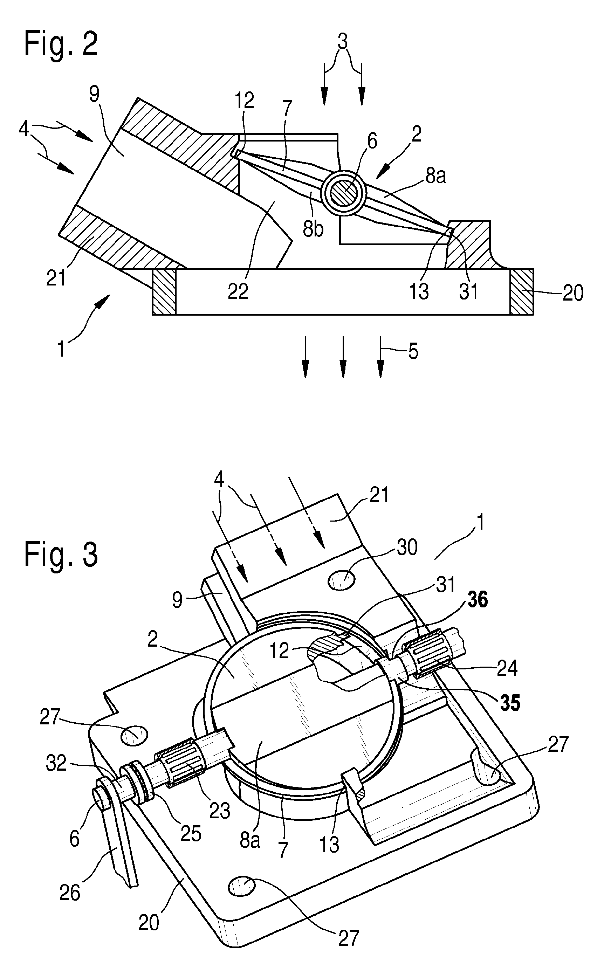

Der Darstellung gemäß Figur 2 ist eine Seitenansicht eines Gehäuses 1 zu entnehmen, in welcher das erfindungsgemäß vorgeschlagene Regelelement 2 aufgenommen ist.

Der Abgasstrom 4 vom Hochdruckturbinenteil der zweistufigen Aufladeeinrichtung strömt dem Gehäuse 1 über den Stutzen 21 zu. Am Gehäuse 1 ist ein einen Befestigungsflansch darstellender Gehäusesockel 20 ausgebildet. Mit Bezugszeichen 22 ist die Innenseite des Gehäuses 1 bezeichnet, innerhalb dessen das Regelelement 2 um die Drehachse 6 verschwenkbar ist. Wie in der Darstellung gemäß Figur 2 zu erkennen ist, ist die Butterfly-Klappe 7 an ihrem Umfang mit einem Randbereich 31 versehen ist, der mit den Anschlagflächen 12, 13 des Gehäuses in einem Dichtbereich flachdichtend zusammenwirkt. Zu diesem Zweck ist der Randbereich 31 der Butterfly-Klappe 7 in einem Teilbereich an der Oberseite 8a der Butterfly-Klappe 7 mit einer ersten Dichtfläche zur Anlage an der Anschlagfläche 13 des Gehäuses und in einem Teilbereich an der Unterseite 8b der Butterfly-Klappe 7 mit einer zweiten Dichtfläche zur Anlage an der Anschlagfläche 12 versehen. In Bezug auf den Abgasmassenstrom 3, der von der Verbrennungskraftmaschine dem Gehäuse 1 zuströmt, liegen die erste Anschlagfläche 12 und die zweite Anschlagfläche 13 vorzugsweise in axialer Richtung im Gehäuse orientiert. Wie aus der Darstellung gemäß Figur 2 hervorgeht, ist die erste Dichtfläche und die zweite Dichfläche alternierend an Ober- und Unterseite der Butterfly-Klappe 7 angeordnet. Auch in der Darstellung gemäß Figur 2 ist die Öffnung des Gehäuses 1, über welcher der Abgasstrom 3 von der Verbrennungskraftmaschine zuströmt, durch die Klappe 7 des Regelelements 2 verschlossen. Aufgrund der axialen Lagerung des Regelelements 2 werden Leckageströme vermieden. Die axiale Lagerung des Regelementes 2 ist in Figur 3 dargestellt.

Wie aus der Darstellung gemäß Figur 2 hervorgeht, hintergreift die erste Anschlagfläche 12 des Gehäuses 1 den umlaufenden Randbereich der Klappe 7; gleiches gilt auch für die zweite Anschlagfläche 13 im Gehäuse 1, so dass eine gute Dichtwirkung erzielt wird und der Abgasstrom der Verbrennungskraftmaschine nahezu vollständig über die zweistufig ausgebildete Aufladeeinrichtung geführt werden kann.

Mit Bezugszeichen 4 ist der vom Hochdruckturbinenteil der zweistufigen Aufladeeinrichtung dem Gehäuse 1 zuströmende Abgasstrom bezeichnet; Bezugszeichen 5 deutet den Abgasstrom an, der vom Gehäuse 1 aus einem niederdruckseitigen Turbinenteil der zweistufigen Aufladeeinrichtung zuströmt. Das gesamte Regelelement 2 ist aus einem temperaturbeständigem Material wie z.B. Metall hergestellt. Zwischen dem Randbereich 31 der Butterfly-Klappe 7 des Regelelements 2 und den den Randbereich 31 umgebenden Gehäuseinnenwänden im Bereich der ersten Anschlagfläche 12 bzw. der zweiten Anschlagfläche 13 besteht ein Axialspiel, um auch in erwärmtem Zustand zu gewährleisten, dass das Regelelement 2 durch seinen Antrieb leichtgängig betrieben werden kann und keine erhöhten Stellkräfte aufgrund von Verklemmungen bei Erhitzung erforderlich werden.

Der Darstellung gemäß Figur 3 ist eine geschnittene perspektivische Draufsicht auf das in der Figur 2 als Schnittdarstellung wiedergegebene Gehäuse zu entnehmen.

Das Regelelement 2 umfasst auf seiner Vorder- und seiner Rückseite jeweils die in Figur 2 geschnitten dargestellten Verrippungen. Am Regelelement 2 sind die Zapfen 32 erkennbar, welche die Lagerungsstellen des Regelelements 2 im Gehäuse 1 bilden. Die Zapfen fallen mit der Schwenkachse 6 der Klappenfläche 7 des Regelelements 2 zusammen. Die Zapfen 32 können wie in Fig. 3 dargestellt, zum Beispiel mittels Nadellagern 23, 24 im Gehäuse 1 gelagert werden. Neben dem Einsatz von Nadellagern 23, 24, die aus hitzebeständigem Material gefertigt sind, können die Zapfen 32 des Regelelements 2 auch in Gleitlagern innerhalb des Gehäuses 1 aufgenommen sein. Der Darstellung gemäß Figur 3 ist darüber hinaus das auf dem Zapfen 32 aufgenommene Axiallager 25 zu entnehmen. Der Zapfen 32 ist mit einem Stellglied 26 betätigbar, mittels dessen das Regelelement 2 in seinem Gehäuse 1 um die Schwenkachse 6 verschwenkbar ist. In der Darstellung gemäß Figur 3 ist die Klappe 7 durchbrochen dargestellt, um die gehäuseseitig ausgebildete erste Anschlagfläche 12 zu zeigen, auf der der Randbereich 31 der Klappe 7 in der in Figur 3 dargestellten Position anliegt. Wie weiterhin in den Figuren 1 bis 4 zu erkennen ist, ist der Dichtbereich über einen Teilumfang eines von einer Gehäusedichtfläche 36 dicht umfassten Zapfenabschnitts 35 der beiden Zapfen 32 fortgeführt. Insbesondere ist die erste Dichtfläche über einen Teilumfang des Zapfenabschnitts 35 an der Oberseite 8a und die zweite Dichtfläche wenigstens über einen Teilumfang des Zapfenabschnitts 35 an der Unterseite 8b der Butterfly-Klappe 7 fortgeführt.

Das Gehäuse 1 weist mehrere Bohrungen 27 auf, mit welchen das Gehäuse 1, in welches das erfindungsgemäß vorgeschlagene Regelelement 2 integriert ist, im Abgastrakt einer Verbrennungskraftmaschine mit dem dort vorhandenen Rohrleitungssystem verbunden werden kann. Der als Sockel 20 ausgebildete Teil des Gehäuses 1 wird mit einem Anschlussflansch an dem Eintritt der niederdruckseitigen Turbine der mehrstufigen Aufladeeinrichtung zuweisend verbunden, während am Stutzen 21 eine Abgasleitung angeschlossen werden kann, welche vom hochdruckseitigen Teil der zweistufigen Aufladeeinrichtung zum Gehäuse 1 verläuft.

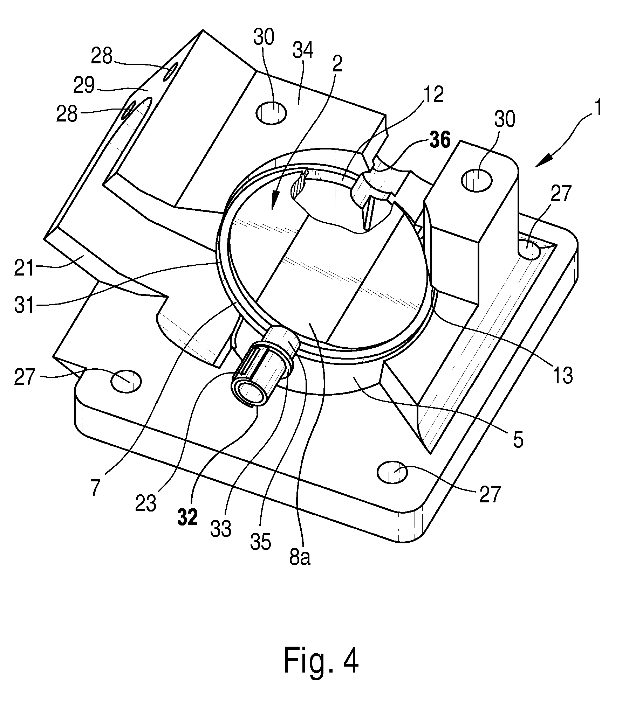

Figur 4 ist eine perspektivische Draufsicht auf das Gehäuse gemäß der Darstellungen in den Figuren 2 und 3 mit integriertem Regelelement zu entnehmen.

Aus Gründen der besseren Übersichtlichkeit ist in der Darstellung gemäß Figur 4 nur einer der Zapfen 32 des Regelelements 2 dargestellt, welcher mit dessen Schwenkachse 6 zusammenfällt. In der Darstellung gemäß Figur 4 ist auf dem Zapfen 32 des Regelelements 2 ein erstes Nadellager 23 aufgeschoben, welches an einem Ring 33 des Zapfens 32 anliegt. Durch die Position des Rings 33 wird die Position des ersten Nadellagers 32 auf dem Zapfen 32 definiert.

Das in Figur 4 in der perspektivischen Draufsicht dargestellte Gehäuse 1 umfasst die bereits im Zusammenhang mit Figur 3 erwähnten Bohrungen 27 zur Befestigung des Gehäuses 1 an einem dem niederdruckseitigen Turbinenteil zuweisenden Leitungsabschnitt im Rahmen des Abgastraktes der Verbrennungskraftmaschine. Am Gehäuse 1 ist darüber hinaus am Stutzen 21 eine Stirnfläche 29 ausgebildet, mit mehreren Flanschbohrungen 28 versehen ist. Über die Flanschbohrungen 28 kann das Gehäuse 1 mit einem Rohrleitung steil des Abgastraktes verbunden werden, über welchem dem Gehäuse 1 der Abgasstrom 4, der vom hochdruckseitigen Turbinenteil der zweistufigen Aufladeeinrichtung stammt, zugeleitet werden kann. Ferner umfasst das in Figur 4 dargestellte Gehäuse eine weitere Stirnfläche 34, in der ebenfalls Flanschbohrungen 30 ausgebildet sind. An der weiteren Stirnfläche 34 wird der Rohrleitungsabschnitt befestigt, über welchen dem Gehäuse 1 der Abgasstrom 3 der Verbrennungskraftmaschine zugeführt wird, der in Schließstellung des Regelelements 2, d.h. bei dessen Anlage an der ersten Anschlagfläche 12 bzw. der zweiten Anschlagfläche 13 die in Figur 1 dargestellte Zuströmöffnung 10 verschließt. In der in Figur 4 dargestellten Schwenkstellung des Regelelements 2 ist der Strömungsquerschnitt des Stutzens 21, über dem der Abgasstrom 4 vom hochdruckseitigen Turbinenteil zuströmt, mit dem Abströmquerschnitt, über welchen der Abgasstrom 5 zum niederdruckseitigen Turbinenteil der zweistufigen Aufladeeinrichtung strömt, kurzgeschlossen.

Mit dem in den Figuren 1 bis 4 dargestellten als Butterfly-Klappe ausgebildeten Regelelement 2 kann ein einzelnes Bauteil zum Umschalten des gesamten Abgasmassenstroms 3 eingesetzt werden. Das Regelelement 2 ist um seine Schwenkachse 6 stufenlos verstellbar und bietet damit eine gute Dosierbarkeit des Abgasstroms 3 auch in den Zwischenstellungen, d.h. in den Positionen, in denen der an der Klappe 7 ausgebildete umlaufende Dichtbereich nicht an der ersten Anschlagfläche 1 bzw. der zweiten Anschlagfläche 13 des Gehäuses 1 anliegt und mithin eine Abgasströmung über die dadurch gebildete Spalte ermöglicht.

Des weiteren benötigt das erfindungsgemäß vorgeschlagene in den Abgaskrümmerbereich integrierbare Regelelement 2 aufgrund seiner Ausbildung als Butterfly-Klappe nur geringe Stellkräfte, da der Abgasdruck nicht einseitig auf die Klappenfläche 7 des Regelelements 2 wirkt, sondern diese gleichmäßig in Bezug auf die Schwenkachse 6 beaufschlagt. Da die erste Anschlagfläche 12 und die zweite Anschlagfläche 13 im Gehäuse 1 derart ausgebildet sind, dass diese in Bezug auf die Öffnungsbewegung des Regelelements 2 hinter dem umlaufenden Randbereich 31 der Klappenfläche 7 liegen, tritt kein Verklemmen des Regelelements 2 auf. Aufgrund der Ausbildung des umlaufenden Randbereichs 31 in Umfangsrichtung ist eine gute Dichtwirkung gewährleistet. Die gute Dichtwirkung wird dadurch verbessert, dass aufgrund der Ausbildung des Regelelements 2 als Butterfly-Klappe eine axiale Lagerung der Schwenkachse 6 realisiert werden kann, wodurch keine Leckageabgasströme auftreten können. In den Figuren 1 bis 4 ist das Regelelement 2 in seiner Schließstellung dargestellt. In dieser Position des Regelelementes strömt der Abgasstrom 3, der von der Verbrennungskraftmaschine dem Gehäuse zuströmt, über den Hochdruckturbinenteil und den Niederdruckturbinenteil des zweistufig ausgelegten Aufladesystems.

### Bezugszeichenliste

- 1: Gehäuse
- 2: Regelelement
- 3: Abgasstrom von der Verbrennungskraftmaschine
- 4: Abgasstrom vom Hochdruckturbinenteil
- 5: Abgasstrom zum Niederdruckturbinenteil
- 6: Schwenkachse
- 7: Butterfly-Klappe
- 8a/b: Oberseite/Unterseite Klappenfläche
- 9: Zuströmöffnung für Abgasstrom 4
- 10: Zuströmöffnung für Abgasstrom 3
- 11: Drehrichtungen
- 12: 1. Anschlagfläche gehäuseseitig
- 13: 2. Anschlagfläche gehäuseseitig

- 20: Sockel
- 21: Stutzen
- 22: Innenwand
- 23: 1. Nadellager
- 24: 2. Nadellager
- 25: Axiallager
- 26: Stellglied
- 27: Bohrung
- 28: Flanschbohrung für Leitung HD-Turbinenteil
- 29: Stirnfläche
- 30: Flanschbohrung Abgasleitung
- 31: Randbereich
- 32: Zapfen
- 33: Ring
- 34: weitere Stirnfläche
- 35: Zapfenabschnitt
- 36: Gehäusedichtfläche

## Patentansprüche

1. Regelelement für ein Aufladesystem im Abgastrakt einer Verbrennungskraftmaschine, insbesondere für ein mehrstufiges Aufladesystem mit in Reihe geschalteten Abgasturboladem, wobei das Regelelement (2) in einem Gehäuse (1) angeordnet ist, welches durch einen Abgasmassenstrom (3) der Verbrennungskraftmaschine oder durch einen Abgasmassenstrom (3) der Verbrennungskraftmaschine und den Abgasmassenstrom (4) eines dem Regelelement vorgeschalteten Abgasturboladers beaufschlagbar ist, **dadurch gekennzeichnet, dass** das Regelelement (2) eine Butterfly-Klappe (7) umfasst, die um eine Schwenkachse (6) stufenlos bewegbar ist und mit im Gehäuse (1) ausgeführten Anschlagflächen (12, 13) flachdichtend zusammenwirkt.

2. Regelelement nach Anspruch 1, **dadurch gekennzeichnet, dass** die Butterfly-Klappe (7) an ihrem Umfang mit einem Randbereich (31) versehen ist, der mit den Anschlagflächen (12, 13) in einem Dichtbereich flachdichtend zusammenwirkt.

3. Regelelement nach Anspruch 2, **dadurch gekennzeichnet, dass** die Butterfly-Klappe (2) an wenigsten einem Zapfen (32) schwenkbar gelagert ist und der Dichtbereich wenigstens über einen Teilumfang eines von einer Gehäusedichtfläche (36) dicht umfassten Zapfenabschnitts (35) des wenigstens einen Zapfens (32) fortgeführt ist.

4. Regelelement gemäß Anspruch 1, **dadurch gekennzeichnet, dass** das Regelelement (2) parallel zu einem hochdruckseitigen Turbinenteil der Aufladeeinrichtung geschaltet ist.

5. Regelelement gemäß Anspruch 1, **dadurch gekennzeichnet, dass** die Schwenkachse (6) des Regelelements (2) mit Gleitlagern oder mit Nadellagern (23, 24) im Gehäuse (1) gelagert ist.

6. Regelelement gemäß Anspruch 5, **dadurch gekennzeichnet, dass** die Nadellager (23, 24) aus temperaturbeständigem Material gefertigt sind.

7. Regelelement gemäß Anspruch 1, **dadurch gekennzeichnet, dass** die Anschlagflächen (12, 13) in Bezug auf den strömenden Abgasmassenstrom (3) axial orientiert sind.

8. Regelelement gemäß einem der Ansprüche 1 bis 3 , **dadurch gekennzeichnet, dass** der Randbereich (31) der Butterfly-Klappe (7) in einem Teilbereich an der Oberseite (8a) der Butterfly-Klappe (7) mit einer ersten Dichtfläche und in einem Teilbereich an der Unterseite (8b) der Butterfly-Klappe (7) mit einer zweiten Dichtfläche versehen ist.

9. Regelelement gemäß Anspruch 8, **dadurch gekennzeichnet, dass** die erste Dichtfläche wenigstens über einen Teilumfang des Zapfenabschnitts (35) an der Oberseite (8a) und die zweite Dichtfläche wenigstens über einen Teilumfang des Zapfenabschnitts (35) an der Unterseite (8b) der Butterfly-Klappe (7) fortgeführt ist.
